# EUROPÄISCHE PATENTSCHRIFT

(11) **EP 2 719 484 B1**
(45) Veröffentlichungstag und Bekanntmachung des Hinweises auf die Patenterteilung: **26.02.2020**
(21) Anmeldenummer: 12188332.6
(22) Anmeldetag: 12.10.2012
(51) Int. Cl.: B22F 3/105, B22F 5/08, B22F 3/15, B22F 5/04, B22F 7/06, B22F 5/00, B23P 15/04, B23P 6/00, F16C 33/62, F16C 33/64, F01D 5/14

(54) **BAUTEIL FÜR EINE STRÖMUNGSMACHINE**
COMPONENT FOR TURBOMACHINE
COMPOSANT POUR TURBOMACHINE

(43) Veröffentlichungstag der Anmeldung: 16.04.2014
(73) Patentinhaber: MTU Aero Engines AG, 80995 München (DE)
(72) Erfinder: Dr. Hiller, Sven, 85244 Röhrmoos (DE); Dr. Bayer, Erwin, 85221 Dachau (DE); Heß, Thomas, 81541 München (DE); Geiger, Peter, 80997 Müchen (DE)

(56) Entgegenhaltungen:
- EP-A1- 2 319 641
- EP-A2- 2 428 309
- EP-A2- 2 903 762
- DE-A1-102007 027 367
- DE-C1- 19 935 274
- US-A- 5 837 960
- US-A1- 2009 183 850
- US-A1- 2012 034 101

## Beschreibung

Die Erfindung betrifft ein Bauteil nach dem Oberbegriff des Patentanspruchs 1.

In Strömungsmaschinen wie Fluggasturbinen oder stationären Gasturbinen sind die meisten Bauteile aufgrund der hohen mechanischen, chemischen und/oder thermischen Beanspruchung hochbelastet. Beispiele für insbesondere mechanisch hochbelaste Bauteile einer Strömungsmaschine sind Rollenlager, z.B. Kugellager oder Zylinderlager. Aufgrund von im Betrieb auftretenden Belastungen, beispielsweise durch Fliehkräfte der Rollenkörper bzw. Wälzkörper, Abrollbewegungen der Rollenkörper oder durch Schubkräfte, sind die äußeren Lagerschalen hohen Belastungen ausgesetzt. Als Folge dieser Belastungen kommt es regelmäßig zum Verschleiß wie "Fretting" und "Pitting". Um zum einen den hohen Belastungen standhalten zu können, und um zum anderen eine möglichst günstige Verteilung der sogenannten Hertzschen Pressung gewährleisten zu können, bestehen die Lagerschalen aus Werkstoffen bzw. Materialien mit entsprechenden Materialeigenschaften hinsichtlich ihrer Steifigkeit, Zähigkeit und Festigkeit. Bevorzugterweise bestehen die Lagerschalen aus einer Metalllegierung. Zudem werden ihre Lagerflächen mit Beschichtungen aus einem Material mit einer hohen Verschleißbeständigkeit wie Keramik versehen. Siehe hierzu beispielsweise die WO 2007/085328 A1 und die EP 2037135A2. Aus der US 5,593,234 A ist es bekannt, eine mehrlagige Beschichtung aus unterschiedlichen Materialien einschließlich Keramik auszubilden, bei denen die Dicke der einzelnen Lagen jeweils im Nanobereich liegt. Eine vergleichende mehrlagige Beschichtung ist ebenfalls aus der US 2005/007930 A1 bekannt. Zudem ist es aus der DE 11 2007 000436 T5 bekannt, ein Wälzlager mit einer Keramikschicht zu versehen, die in einem Aerosolabscheideverfahren hergestellt wird. Des Weiteren ist es bekannt, Rollenlager als sogenannte Hybridlager auszubilden, bei denen beispielsweise die Rollenkörper aus Keramik bestehen, um durch die hierdurch reduzierte Masse jedes einzelnen Rollenkörpers die Fliehkraftbelastung auf die äußere Lagerschale zu reduzieren.

Weitere hochbelastete Bauteile in Strömungsmaschinen sind beispielsweise Leit- und Laufschaufeln. Im Turbinenbereich werden die Leit- und Laufschaufeln regelmäßig mit Temperatur-, Oxidations- und Korrosionsschutzschichten versehen, die herkömmlicherweise durch ein thermisches Spitzverfahren aufgebracht werden. Im Verdichterbereich werden die Leit- und Laufschaufeln meistens mit Erosionsschutzschichten versehen, die ebenfalls durch ein thermisches Spritzverfahren aufgebracht werden. Zudem sind Vollkeramikschaufeln bekannt, die aufgrund des keramischen Werkstoffes eine höhere Temperaturbeständigkeit und damit einen geringeren Kühlbedarf als die auf einem metallischen Werkstoff basierenden Leit- und Laufschaufeln haben.

Nachteilig an den vorgenannten Verschleiß und Schutzschichten ist jedoch, dass sie nur in dünnen Schichten aufgebracht werden, da sie sonst abplatzen. Vollkeramikschaufeln sind insofern problematisch, als das die Keramik eine hohe Sprödbruchneigung, eine geringe Temperaturschockbeständigkeit und eine geringe Duktilität aufweist, wodurch bereits eine kleine Beschädigung zu einer vollständigen Zerstörung der Vollkeramikschaufeln führen kann.

Weiterer Stand der Technik ist in der EP 2 319 641 A1, der US 2012/0034101 A1, der EP 2 903 762 A2 und der EP2428309A2 gezeigt.

Aufgabe der Erfindung ist es ein hochbelastbares Bauteil zu schaffen, das eine hohe Beständigkeit gegen mechanische, thermische und/oder chemische Belastungen aufweist und zudem ein optimiertes Versagensverhalten zeigt.

Diese Aufgabe wird gelöst durch ein Bauteil mit den Merkmalen des Patenanspruchs 1.

Ein erfindungsgemäßes Bauteil für eine Strömungsmaschine, mit einem generativ hergestellten Grundkörper aus einem ersten Material und mit zumindest einem an dem Grundkörper aufgebauten Bauteilabschnitt aus einem andersartigen zweiten Material, ist hergestellt, indem der zumindest eine Bauteilabschnitt am Grundkörper entweder generativ aufgebaut ist oder durch Aufbringen des zweiten Materials in trockener Pulverform oder als Dispersion auf den Grundkörper und anschließendem Sintern unterhalb der Schmelztemperatur des Grundkörpermaterials aufgebaut ist.

Ein derartiges Bauteil ist ein Hybridbauteil mit zumindest zwei Bereichen aus unterschiedlichen Materialien. Es zeichnet sich durch eine hohe mechanische, chemische und thermische Belastbarkeit sowie durch ein optimiertes Versagensverhalten aus.

Bevorzugterweise ist der zumindest eine Bauteilabschnitt in den Bauteilbereichen vorgesehen, in denen das Bauteil einer chemischen Belastung wie Oxidation, Korrosion, Erosion, einer hohen thermischen Belastung und und/oder einer hohen mechanischen Belastung wie einem Verschleiß ausgesetzt ist. Alternativ kann der zumindest eine Bauteilabschnitt jedoch auch dämpfende Eigenschaften aufweisen und beispielsweise neben einem andersartigen Material als der Grundkörper eine andere Struktur als dieser aufweisen.

Beispielhafte Bauteile, insbesondere von Strömungsmaschinen, sind Lageschalen, aerodynamische Profile oder Vorderkanten und Hinterkanten einer Laufschaufel oder Leitschaufel, Haken von Leitschaufeln, Flansche, Laufschaufelfüße, Dichtstreifen bei Segmentdichtungen zum Beispiel an Leitschaufeln, Strukturrippen in Maschinengehäusen, Innendeckbänder und/oder Außendeckbänder.

Der zumindest eine Bauteilabschnitt ist mit dem Grundkörper formschlüssig verzahnt. Hierdurch wird eine globale Verzahnung von mehreren Millimetern geschaffen, die eine besonders belastbare Verbindung des zumindest einen Bauteilabschnittes an den Grundkörper schafft.

Zur Stabilisierung der Verzahnung weist diese verschiedene Verzahnungsgeometrieen auf. Zudem kann die Verzahnung verschiedene Verzahnungsrichtungen aufweisen. Sowohl durch die verschiedenen Verzahnungsgeometrieen als auch durch die verschiedenen Verzahnungsrichtungen kann die Verzahnung gezielt auf mechanische Belastungsrichtungen eingestellt werden.

Zur Vermeidung von Dehnungs- und Schwingungsproblemen in Folge der unterschiedlichen Materialien ist der zumindest eine Bauteilabschnitt segmentiert. Der zumindest eine Bauteilabschnitt ist somit in einzelne Segmente unterteilt, die über schmale Grundkörperbereiche voneinander beabstandet sind, so dass beispielsweise Spannungsrisse in dem zumindest einen Bauteilabschnitt verhindert werden.

Der zumindest eine Bauteilabschnitt kann zumindest eine Dehnungsfuge aufweisen. Im Unterschied zur Segmentierung ist in den Dehnungsfugen kein Grundkörpermaterial angeordnet, so dass sich Bauteilabschnittskanten, die jeweils eine Dehnungsfugen bilden, frei gegenüber liegen.

Des Weiteren können zusätzlich zur Vermeidung von Dehnungs- und Schwingungsproblemen in dem zumindest einen Bauteilabschnitt Verstärkungsfasern eingebracht sein. Die Verstärkungsfasern sind beispielsweise hochtemperaturfeste Fasern wie Kohlenstofffasern, Glasfasern oder Aramidfasern. Um die Dehnungen und Schwingungen gezielt aufnehmen zu können, sind sie bevorzugterweise in Belastungsrichtung in den zumindest einen Bauteilabschnitt integriert. So sind sie bevorzugterweise in Richtungen von zu erwartenden Zugspannungen orientiert. Die Verstärkungsfasern können als Gewebe, Gelege, Gewirk und dergleichen eingebracht sein. Zudem sind lediglich mehrere Einzelfasern möglich.

Bevorzugterweise bilden der zumindest eine Baueilabschnitt und der Grundkörper an äußeren Stoßstellen Überlappungen. Hierdurch wird zum einen ein sanfter Übergang von den Bauteilabschnitten auf den Grundkörper geschaffen, was sich günstig auf die Belastungseinleitung von den Bauteilabschnitten in den Grundkörper auswirkt. Zum anderen werden durch die Überlappungen großflächige Kontaktbereiche zwischen dem Grundkörper und den Bauteilabschnitten geschaffen, was befestigungsfördernd für den zumindest einen Bauteilabschnitt an dem Grundkörper ist.

Bei einem Ausführungsbeispiel ist zumindest der zumindest eine Bauteilabschnitt mit einer gesinterten Deckschicht versehen. Durch das Sintern ist die Deckschicht zumindest mittels einer Mikroverzahnung mit dem zumindest einen Bauteilabschnitt verbunden, so dass diese durch die Mikroverzahnung eine hohe Adhäsion und somit beispielsweise ein sehr geringes Abplatzrisiko zeigt.

Sonstige vorteilhafte Ausführungsbeispiele der Erfindung sind Gegenstand weiterer Unteransprüche.

Bei einem bevorzugten Verfahren zur Herstellung eines erfindungsgemäßen Bauteils, das einen Grundkörper aus einem ersten Material und zumindest einen Bauteilabschnitt aus einem andersartigen zweiten Material hat, wird zuerst eine Bauteilform definiert. Dann wird der Grundkörper generativ hergestellt. Gleichzeitig beim generativen Herstellen des Grundkörpers wird der zumindest eine Bauteilabschnitt generativ an dem Grundkörper aufgebaut, wobei zwischen dem Grundkörper und dem zumindest einen Bauteilabschnitt eine formflüssige Verzahnung gebildet wird.

Die formschlüssige Verzahnung ist eine sogenannte globale Verzahnung, die sich mehrere Millimeter in den Grundkörper hinein erstrecken kann. Sie bildet quasi einen Anker des Bauteilabschnitts in dem Grundkörper, wodurch dieser besonders belastbar mit dem Grundkörper verbunden ist. Zudem bewirkt die formschlüssige Verzahnung, dass bei einer Beschädigung eines Bauteilabschnittsbereiches ein unbeschädigter Bauteilabschnittsbereich unversehrt bleibt, so dass ein Totalversagen des Bauteils wirkungsvoll verhindert wird.

Mittels des Verfahrens werden Hybridbauteile gebildet, die zumindest zwei fest miteinander verbundende Bauteilbereiche aus unterschiedlichen Material aufweisen. In Abhängigkeit vom gewählten Material kann der zumindest eine Bauteilabschnitt gezielt eingestellt werden. Beispielsweise kann der Grundkörper metallisch sein und der zumindest eine Bauteilabschnitt auf einer Keramik basieren. Durch eine solche Hybridbauweise wird beispielsweise der katastrophale Schadensverlauf einer Vollkeramikschaufel verhindert. Selbstverständlich kann das Bauteilabschnittsmaterial bei einem metallischen Grundkörper auch metallisch sein, jedoch dann aus einem andersartigen Metall bzw. einer andersartigen Metalllegierung. Die generative Herstellung des Bauteils kann in einem Pulverbett oder pulverbettfrei ähnlich dem Fused Deposition Modeling erfolgen. Bevorzugterweise werden die Materialien als Nanopulver bereitgestellt, was neben einer hohen Verdichtung die Ausbildung des Bauteilabschnitts als Dünnschicht erlaubt.

Bei einem alternativen Verfahren zur Herstellung eines erfindungsgemäßen Bauteils, das einen Grundkörper aus einem ersten Material und zumindest einem Bauteilabschnitt aus einem andersartigen zweiten Material hat, wird zuerst eine Bauteilform definiert. Dann wird der Grundkörper generativ hergestellt. Anschließend wird der zumindest eine Bauteilabschnitt an dem Grundkörper aufgebaut, wobei das zweite Material bzw. das Bauteilabschnittmaterial in trockener Pulverform oder als Dispersion auf den Grundkörper aufgebracht wird. Danach wird das Bauteilabschnittmaterial unterhalb einer Schmelztemperatur des ersten Materials bzw. des Grundkörpermaterials gesintert.

Durch das Sintern lässt sich zumindest eine Mikroverzahnung zwischen dem Grundkörper und dem zumindest einen Bauteilabschnitt erzielen. Die Mikroverzahnung bewirkt eine hohe Adhäsion zwischen dem Grundkörper und dem zumindest einen Bauteilabschnitt, so dass, wenn beispielsweise der Bauteilabschnitt eine Dünnschicht in Form einer Verschleißschicht oder einer Schutzschicht ist, diese besonders fest mit dem Grundkörper verbunden ist und ein Abplatzrisiko aufgrund von mechanischen, chemischen und/oder thermischen Belastungen signifikant gesenkt wird. Beispielsweise ist das Grundkörpermaterial metallisch und das Bauteilabschnittsmaterial eine Keramik. Selbstverständlich kann das Bauteilabschnittsmaterial bei einem metallischen Grundkörper auch metallisch sein, jedoch dann aus einem andersartigen Metall bzw. einer andersartigen Metalllegierung. Die Durchführung des Verfahrens kann in einem Pulverbett oder pulverbettfrei erfolgen. Bevorzugterweise wird das Bauteilabschnittsmaterial als Nanopulver in trockener oder flüssiger Form (Dispersion) bereitgestellt.

Das Verfahren ermöglicht es auch, den Bauteilabschnitt in mehreren Lagen aufzubringen. Hierdurch kann eine Dicke des Bauteilabschnittes lagenweise gesteigert werden, wobei die Lagen einzeln mittels Mikroverzahnung miteinander verbunden werden, so dass ein derartiger dickwandiger Bauteilabschnitt hochbelastbar ist.

Bei einem Ausführungsbeispiel, bei dem der zumindest eine aufzubauende Bauteilabschnitt eine Schichtdicke im Bereich von Dickschichten mit einigen Millimetern liegen soll, wird beim Schritt "generatives Herstellen des Grundkörpers in dem Grundkörper" zumindest eine Aussparung zur Bildung einer formschlüssigen Verzahnung zwischen den Grundkörper und den zumindest einem Bauteilabschnitt eingebracht und beim Schritt "Aufbauen des zumindest einen Bauteilabschnitts am Grundkörper" die zumindest eine Aussparung mit dem zweiten Material bzw. dem Bauteilabschnittsmaterial aufgefüllt. Durch die formflüssige Verzahnung wird eine globale Verzahnung gebildet, die eine hochbelastbare Verankerung des zumindest einen Bauteilabschnitts an dem Grundkörper schafft.

Zudem kann zumindest auf den zumindest einen Bauteilabschnitt durch Sintern eine Deckschicht aufgebracht werden. Die Deckschicht ist bevorzugterweise eine Dünnschicht, die zur Vergrößerung ihrer Dicke in mehreren Lagen aufgetragen werden kann.

Die Erfindung wird anhand schematischer Darstellungen näher erläutert, wobei Figur 1 bis 5 nicht Teil der Erfindung sind. Es zeigen:
- Figur 1: einen Schnitt durch eine erste äußere Lagerschale,
- Figur 2: einen Schnitt durch eine zweite äußere Lagerschale,
- Figur 3: einen Schnitt durch eine Leitschaufel,
- Figur 4: einen Schnitt durch ein erstes Schaufelblatt,
- Figur 5: einen Schnitt durch ein zweites Schaufelblatt, und
- Figur 6: einen Schnitt durch ein erfindungsgemäßes Bauteil.

Im Folgenden haben gleiche konstruktive Elemente gleich Bezugszeichen, wobei bei mehreren gleichen konstruktiven Elementen in einer Figur lediglich einige der gleichen konstruktiven Elemente mit einem Bezugszeichen versehen sind.

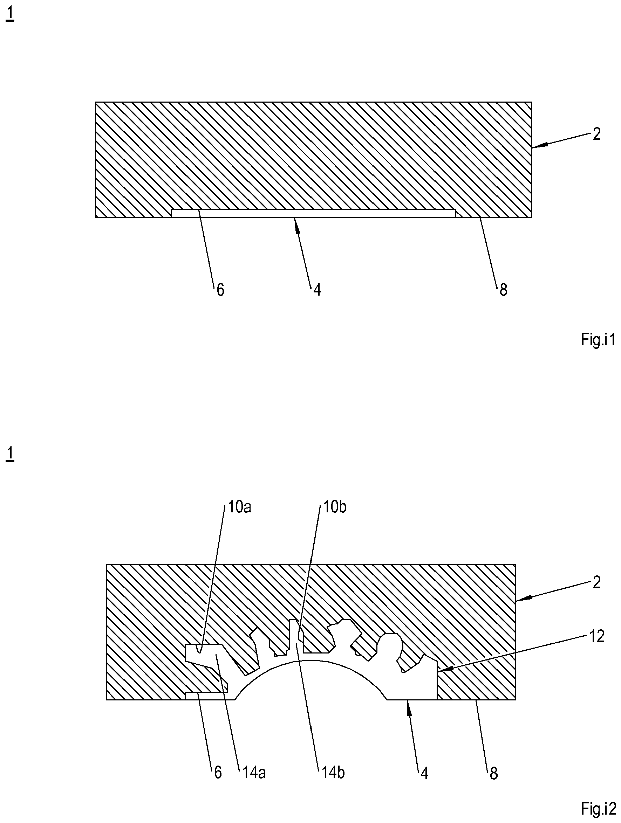

Figur 1 zeigt einen Schnitt durch ein erstes Bauteil 1. Das Bauteil 1 ist beispielweise eine äußere Lagerschale einer Strömungsmaschine wie ein Flugtriebwerk oder eine stationäre Gasturbine und hat einen Grundkörper 2 aus einem ersten Material und einen Bauteilabschnitt 4 aus einem vom ersten Material unterschiedlichen zweiten Material. Beispielsweise ist das Grundkörpermaterial ein Metall bzw. eine Metalllegierung und das zweite Material bzw. das Bauteilabschnittsmaterial eine Keramik. Das Bauteil 1 ist somit in diesem Beispiel ein Metall-Keramik-Verbund.

Der Bauteilabschnitt 4 ist in einer Senke 6 des Grundkörpers 2 angeordnet und bildet mit diesem eine ebene Oberfläche 8. Beispielsweise ist der Bauteilabschnitt 4 eine mechanisch hochbelastete dünnschichtartige keramische Lauf- bzw. Verschleißfläche für Wälzkörper, die durch die äußere Lagerschale 1 geführt werden.

Bei einem Verfahren zur Herstellung des Bauteils 1 wird zuerst dessen Bauteilform definiert. Dann wird der Grundkörper 2 generativ hergestellt. Danach wird der Bauteilabschnitt 4 als Nanopulver in trockener Form oder als Dispersion auf den Grundkörper 2 aufgebracht bzw. in der Senke 6 angeordnet. Bevorzugterweise ist in der Dispersion ein metallisches Bindemittel enthalten. Anschließend wird das Bauteilabschnittmaterial unterhalb einer Schmelztemperatur des Grundkörpermaterials 2 im Vakuum unter Druck gesintert und bevorzugterweise nachverdichtet. Das Nachverdichten erfolgt beispielsweise mittels einer heißisostatischen Nachverpressung (Hippen). Als Ergebnis des Herstellungsverfahrens hat die äußere Lagerschale 1 eine mit dem Grundkörper 2 mikroverzahnte keramische dünnschichtartige Lauffläche 4. Dabei ist auch ein graduierter Aufbau des Bauteilabschnittes 4 bzw. der keramischen Lauffläche in mehreren sehr dünnen Lagen möglich.

In Figur 2 ist ein zweites Bauteil 1 gezeigt. Dieses ist ebenfalls als eine äußere Lagerschale 1 eines Rollenlagers ausgebildet und besteht aus einem Grundkörper 2 aus einem ersten Material einem Bauteilabschnitt 4 aus einem vom ersten Material unterschiedlichen zweiten Material. Beispielsweise ist das Grundkörpermaterial eine metallischer Werkstoff und das Bauteilabschnittmaterial eine Keramik. Die Bauteil 1 ist somit auch in diesem Beispiel ein Metall-Keramik-Verbund, wobei der Grundkörper 2 metallisch ist und der Bauteilabschnitt 4 aus einer Keramik besteht. Der Bauteilabschnitt 4 bildet eine keramische Lauffläche für Wälzkörper und ist in einer Senke 6 des Grundkörpers 2 angeordnet, die zudem eine konkave Aushöhlung bildet.

Im Wesentlichen Unterschied zum ersten Beispiel ist der Bauteilabschnitt 4 mit dem Grundkörper 2 formschlüssig verzahnt. Hierzu weist der Grundkörper 2 eine Vielzahl von Aussparungen 10a, 10b auf, die mit dem Bauteilabschnittsmaterial 4 aufgefüllt sind, sodass zwischen den Bauteilabschnitt 4 und dem Grundkörper 2 eine formschlüssige beziehungsweise globale Verzahnung 12 gebildet ist. Die Verzahnung 12 erstreckt sich mehrere Millimeter in den Grundkörper 2 hinein und weist eine Vielzahl von unterschiedlichen Verzahnungsgeometrieen 14a, 14b auf. Während beispielsweise die Verzahnungsgeometrie 14a L-förmig ist und einen abgewinkelten Grundabschnitt hat, ist die andere Verzahnungsgeometrie 14b stiftartig. Vorzugsweise erstrecken sich die Verzahnungsgeometrieen 14a, 14b in Stützrichtung und somit radial von der Lauffläche 4 weg. Die Schichtdicke der Lauffläche 4 an sich hat sich im Vergleich zum ersten Ausführungsbeispiel nicht verändert, so dass auch dieser Bauteilabschnitt 4 trotz seiner Verzahnung 12 eine Dünnschicht ist.

Bei einem ersten Verfahren zur Herstellung des Bauteils 1 nach Figur 2 wird zuerst eine Bauteilform definiert. Dann wird der Grundkörper 2 mit den Aussparungen 10 zur Bildung jeweils einer Formschlussverbindung zwischen den Grundkörper 2 und dem Bauteilabschnitt 4 generativ hergestellt. Anschließend wird der Bauteilabschnitt 4 an dem Grundkörper 2 aufgebaut, wobei das Bauteilabschnittsmaterial in die Aussparungen 10 als Nanopulver in trockener Form oder als Dispersion eingefüllt wird. Bevorzugterweise ist in der Dispersion ein metallisches Bindemittel enthalten. Anschließend wird das Bauteilmaterial unter Druck unterhalb einer Schmelztemperatur des Grundkörpermaterials gesintert und anschließend bevorzugterweise nachverdichtet. Dieses Verfahren entspricht dem ersten Verfahren zur Herstellung des Ausführungsbeispiels nach Figur 1 mit dem Unterschied, dass in den Grundkörper 2 Aussparungen 10a, 10b zur Bildung der Verzahnung 12 eingebracht werden, die dann mit dem Bauteilabschnittsmaterial aufgefüllt werden.

Bei einem zweiten Verfahren zur Herstellung des Bauteils 1 nach Figur 2 wird ebenfalls zuerst eine Bauteilform definiert. Dann wird der Grundkörper 2 generativ hergestellt. Gleichzeitig mit dem generativen Herstellen des Grundkörpers 2 wird der Bauteilabschnitt 4 generativ an dem Grundkörper 2 aufgebaut, wobei zwischen dem Grundkörper 2 und dem Bauteilabschnitt 4 die formschlüssige Verzahnung 12 gebildet wird. Zur Durchführung der parallelen generativen Herstellung werden das Grundkörpermaterial und das Bauteilabschnittsmaterial aus zwei unterschiedlichen Quellen zugeführt, je nachdem welcher Bauteilbereich (Grundkörper 2 oder Bauteilabschnitt 4) gerade gefertigt wird.

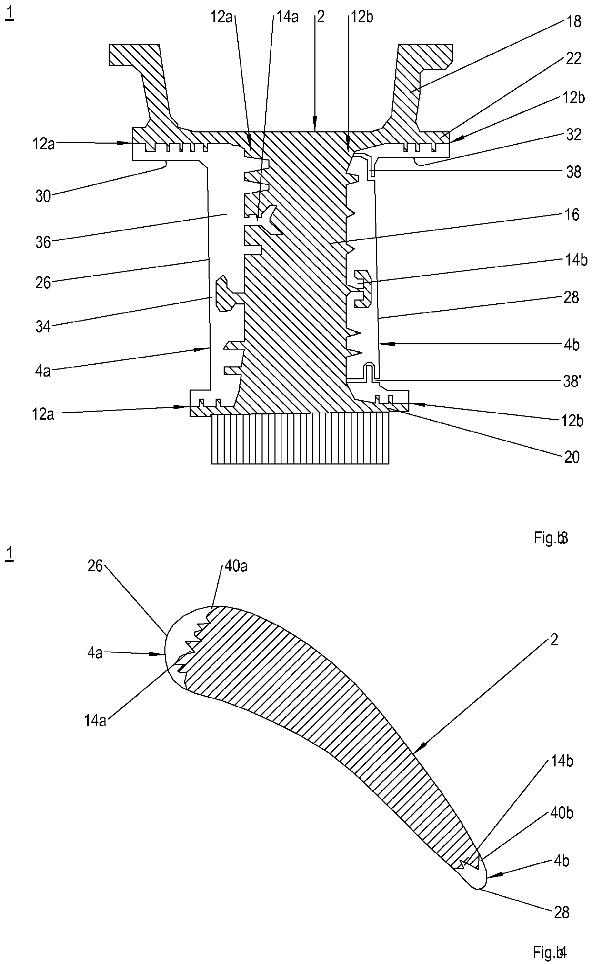

In Figur 3 ist ein Schnitt längs zur Hauptachse durch ein Bauteil 1 gezeigt. Dieses ist eine Leitschaufel einer Strömungsmaschine, die ein Schaufelblatt 16, Schaufelfüße 18, ein Innendeckband 20, ein Außendeckband 22 sowie einen Einlaufbelag 24 aufweist. Das Schaufelblatt 16 hat eine sich zwischen den Innendeckband 20 und dem Außendeckband 22 erstreckende Anströmkante 26 sowie eine sich zwischen dem Innendeckband 20 und dem Außendeckband 22 erstreckende Abströmkante 28.

Das Bauteil bzw. die Leitschaufel 1 besteht aus einem Grundkörper 2 aus einem ersten Material und aus zwei Bauteilabschnitten 4a, 4b aus einem andersartigen zweiten Material. In dem hier gezeigten Beispiel werden die beiden Bauteilabschnitte 4a, 4b von der aerodynamisch und thermisch hochbelasteten Anströmkante 26 bzw. der Abströmkante 28 sowie von gegenüberliegenden Heißgasflächen 30, 32 der Deckbänder 20, 22 gebildet. Die Bauteilabschnitte 4a, 4b sind mit dem Grundkörper 2 formschlüssige verzahnt (Verzahnungen 12a, 12b), wobei jeweils eine Vielzahl von unterschiedlichen Verzahnungsgeometrieen 14a, 14b aufweist. Vorzugsweise besteht der Grundkörper 2 aus einem metallischen Werkstoff und die Bauteilabschnitte 26, 20, 30, 32 aus einer Keramik. Die Leitschaufel 1 ist somit in diesem Ausführungsbeispiel ein Metall-Keramik-Verbund.

Zudem kann jeder Bauteilabschnitte 4a, 4b eine variierende Dicke haben. So kann er sowohl verhältnismäßig dünnwandige Bereiche 34, als auch dickwandige Bereiche 36 aufweisen, die um ein Vielfaches dicker als die dünnwandigen Bereiche 34 ausgeführt sind. Im Allgemeinen richtet sich die Dicke der Bauteilabschnitte 4a, 4b nach den jeweiligen auf das Bauteil 1 in diesem Bereich wirkenden Belastungen.

Zum Ausgleich von unterschiedlichen Dehnungs- und Schwingungsverhalten des Grundkörpermaterials zum Bauteilabschnittsmaterial sind in dem hier gezeigten Ausführungsbeispiel im in Strömungsrichtung einer Heißgasströmung betrachtet hinteren Bauteilabschnitten 4a, 4b zwei Dehnungsfugen 38, 38' eingebracht. Die Dehnungsfugen 38, 38' befinden sich im jeweiligen Übergangsbereich der Abströmkante 28 zu den Heißgasflächen 30, 32. Sie erstrecken sich vollständig durch den hinteren Bauteilabschnitt 4b und unterteilen diesen in drei einzelne Bereiche (Abströmkante 28, Heißgasflächen 30, Heißgasfläche 32) auf, die somit körperlich voneinander getrennt sind. Wie in Figur 2 gezeigt, können die Form der Dehnungsfugen 38, 38' und deren Verlauf untereinander variieren. Generell richtet sich ihre Form, ihr Verlauf und ihre Positionierung nach dem jeweiligen Dehnungs- und Schwingverhalten des Bauteils 1. Selbstverständlich sind auch Dehnungsfugen 38, 38' am Bauteilabschnitt 4a vorstellbar.

Die Herstellung der Leitschaufel 1 erfolgt bevorzugterweise nach dem zweiten Verfahren nach Figur 2 (gleichzeitiges generatives Herstellen des Grundkörpers 2 und der Bauteilabschnitte 4a, 4b). Selbstverständlich kann die Leitschaufel 1 jedoch auch nach dem ersten Verfahren nach Figur 2 hergestellt werden (generatives Herstellen des Grundkörpers 2 und Sintern mit bevorzugtem Hippen des in grundkörperseitigen Aussparungen 10a, 10b eingefüllten Bauteilabschnittsmaterials).

In Figur 4 ist ein Schnitt quer zur Hauptachse durch ein weiteres Bauteil 1 gezeigt. Dieses ist beispielsweise ein Schaufelblatt einer Leit- oder Laufschaufel, wobei eine Anströmkante 26 und eine Abströmkante 28 des Schaufelblattes 1 als jeweils ein Bauteilabschnitt 4a, 4b aus einem vom Grundkörpermaterial unterschiedlichen Material hergestellt sind. Beispielsweise ist das Schaufelblatt 1 ein Metall-Keramik-Verbund, wobei der Grundkörper 2 metallisch ist und die Bauteilabschnitte 4a, 4b aus einer Keramik bestehen. Die Bauteilabschnitte 4a, 4b sind global mit dem Grundkörper 2 mittels einer Vielzahl von unterschiedlichen Verzahnungsgeometrieen 14a, 14b verzahnt.

Wie in Figur 4 gezeigt, sind an äußeren Stoßstellen zwischen dem Grundkörper 2 und den Bauteilabschnitten 4a, 4b Überlappungen 40a, 40b des Grundkörpers 2 und der Bauteilabschnitte 4a 4b gebildet. Hierdurch wird zum einen ein sanfter Übergang von den Bauteilabschnitten 4a, 4b auf den Grundkörper 2 geschaffen, was sich günstig auf die Belastungseinleitung von den Bauteilabschnitten 4a, 4b in den Grundkörper 2 auswirkt. Zum anderen werden durch die Überlappungen 40a, 40b großflächige Kontaktbereiche zwischen dem Grundkörper 2 und den Bauteilabschnitten 4a, 4b geschaffen, was sich befestigungsfördernd auf die Bauteilabschnitte 4a, 4b an dem Grundkörper 2 auswirkt.

Die Herstellung der Leitschaufel 1 erfolgt bevorzugterweise nach dem zweiten Verfahren nach Figur 2 (gleichzeitiges generatives Herstellen des Grundkörpers 2 und der Bauteilabschnitte 4a, 4b). Selbstverständlich kann die Leitschaufel 1 jedoch auch nach dem ersten Verfahren nach Figur 2 hergestellt werden (generatives Herstellen des Grundkörpers 2 und Sintern mit bevorzugtem Hippen des in grundkörperseitigen Aussparungen 10a, 10b eingefüllten Bauteilabschnittsmaterials).

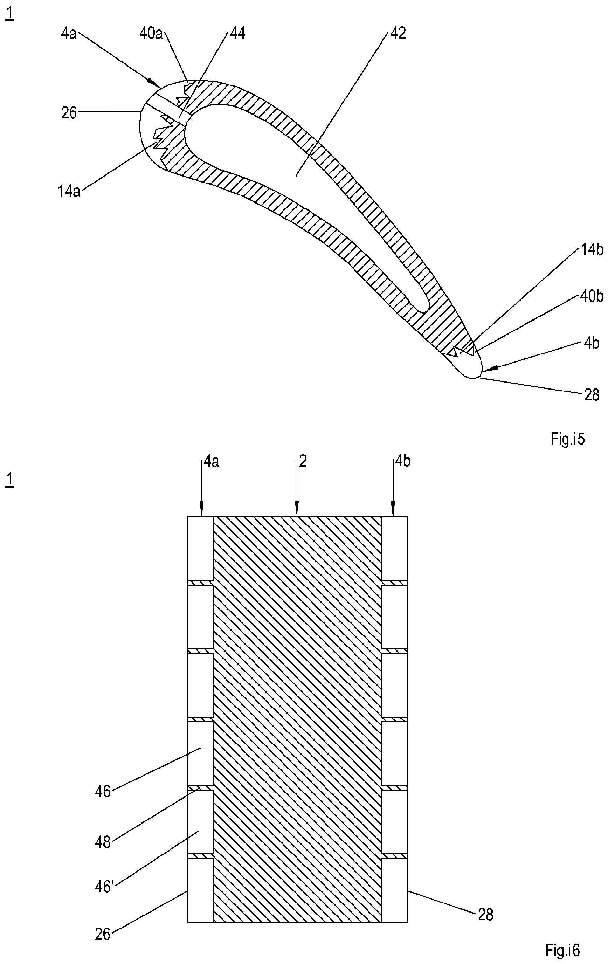

In Figur 5 ist ein Schnitt quer zur Hauptsache durch ein weiteres Beispiel gezeigt. Das Bauteil 1 ist hier ein Schaufelblatt einer Leit- oder Laufschaufel, das als ein Hohlprofil mit einem Kühlluftkanal 42 gebildet ist. Der Kühlluftkanal 42 wird umfangsseitig von einem Grundkörper 2 aus einem ersten Material begrenzt. Im Bereich einer Anströmkante 26 und einer Abströmkante 28 ist jeweils ein Bauteilabschnitt 4a, 4b aus einem andersartigen zweiten Material vorgesehen. Beispielsweise ist das Schaufelblatt 1 ein Metall-Keramik-Verbund, wobei der Grundkörper 2 metallisch ist und die Bauteilabschnitte 4a, 4b aus einer Keramik bestehen.

Die Bauteilabschnitte 4a, 4b umgreifen den Grundkörper 2 im Bereich der Anströmkante 26 und Abströmkante 28 kappenartig und sind mit diesem jeweils global mittels einer Vielzahl von unterschiedlichen Verzahnungsgeometrieen 14a, 14b verzahnt. Zum Ausblasen von Kühlluft aus dem Kühlluftkanal 42 auf die aerodynamisch und thermisch hochbelastete Anströmkante 26 erstreckt sich durch den Grundkörper 2 und den vorderen Bauteilabschnitt 4a eine Vielzahl von Kühlluftbohrungen 44.

Wie zudem in Figur 5 gezeigt, sind entsprechend dem Beispiel nach Figur 4 an äußeren Stoßstellen zwischen dem Grundkörper 2 und den Bauteilabschnitten 4a, 4b Überlappungen 40a, 40b zwischen der Bauteilabschnitte 4a 4b und dem Grundkörper 2 vorgesehen.

Die Herstellung der Leitschaufel 1 erfolgt bevorzugterweise nach dem zweiten Verfahren nach Figur 2 (gleichzeitiges generatives Herstellen des Grundkörpers 2 und der Bauteilabschnitte 4a, 4b). Selbstverständlich kann die Leitschaufel 1 jedoch auch nach dem ersten Verfahren nach Figur 2 hergestellt werden (generatives Herstellen des Grundkörpers 2 und Sintern mit bevorzugtem Hippen des in grundkörperseitigen Aussparungen 10a, 10b eingefüllten Bauteilabschnittsmaterials).

In Figur 6 ist eine schemenhafte Darstellung eines erfindungsgemäßen Bauteil 1 gezeigt. Dieses ist beispielsweise wie die vorhergehenden Beispiele nach den Figuren 4 und 5 ein Schaufelblatt aus einem Grundkörper 2 aus einem ersten Material und zwei Bauteilabschnitten 4a, 4b aus einem zweiten Material, das andersartig als das erste Material ist. Beispielsweise ist das Bauteil 1 ein Metall-Keramik-Verbund, wobei der Grundkörper 2 metallisch ist und die Bauteilabschnitte 4a, 4b aus einer Keramik bestehen.

Die Bauteilabschnitte 4a, 4b sind im Bereich einer Anströmkante 26 und einer Abströmkante 28 des Schaufelblattes 16 angeordnet. Die Bauteilabschnitte 4a, 4b sind zur Vermeidung von Dehnungs- und Schwingungsproblemen aufgrund der unterschiedlichen Materialien in eine Vielzahl von kurzen Segmenten 46, 46' unterteilt, die jeweils über einen stegartigen Grundkörperabschnitt 48 voneinander beabstandet sind. Die Segmente 46, 46' sind mit dem Grundkörper 2 formschlüssig verzahnt (nicht gezeigt) und können eine einheitliche Länge und eine einheitliche Dicke aufweisen. In der gezeigten Perspektive entspricht die Länge einer Höhe bzw. einer Erstreckung von unten nach oben und somit in der Vertikalen. Die Dicke entspricht in der gezeigten Perspektive einer Erstreckung von rechts nach links (Bauteilabschnitt 4a) bzw. von links nach rechts (Bauteilabschnitt 4b) und somit in der Horizontalen. Selbstverständlich kann ihre Länge und Dicke jedoch auch variieren.

Die Herstellung der Leitschaufel 1 erfolgt bevorzugterweise nach dem zweiten Verfahren nach Figur 2 (gleichzeitiges generatives Herstellen des Grundkörpers 2 und der Bauteilabschnitte 4a, 4b). Selbstverständlich kann die Leitschaufel 1 jedoch auch nach dem ersten Verfahren nach Figur 2 hergestellt werden (generatives Herstellen des Grundkörpers 2 und Sintern mit bevorzugtem Hippen des in grundkörperseitigen Aussparungen 10a, 10b eingefüllten Bauteilabschnittsmaterials).

Bei sämtlichen Beispielen und insbesondere bei den Bauteilen 1 mit den dickwandigen Bauteilabschnittsbereichen 36 (s. Figur 3) können alternativ oder zusätzlich zu den Dehnungsfugen 38, 38' bzw. alternativ oder zusätzlich zur Segmentenbildung 46, 46' in die Bauteilabschnitte 4, 4a, 4b hochtemperaturfeste Verstärkungsfasern eingebracht werden. Die Verstärkungsfasern können als Gewebe, Gelege, Gewirk und dergleichen eingebracht sein. Zudem sind lediglich mehrere Einzelfasern möglich.

Ferner können sämtliche Beispiele nach ihrer Herstellung zum Einstellen einer Sollform mechanisch nachbearbeitet werden.

Zudem können sämtliche Beispiele nach ihrer Herstellung abschnittsweise oder vollumfänglich mit einer dünnwandigen Deckschicht versehen werden, die gemäß dem ersten Verfahren nach Figur 1 aufgebracht wird (Sintern und bevorzugterweise anschließendes Hippen des Deckschichtpulvers).

### Bezugszeichenliste

- 1: Bauteil
- 2: Grundkörper
- 4, 4a, 4b: Bauteilabschnitt
- 6: Senke
- 8: Oberfläche
- 6: Senke
- 10: Aussparung
- 12, 12a, 12b: Verzahnung
- 14, 14a, 14b: Verzahnungsgeometrie
- 16: Schaufelblatt
- 18: Schaufelfuß
- 20: Innendeckband
- 22: Außendeckband
- 24: Einlaufbelag
- 26: Anströmkante
- 28: Abströmkante
- 30: Heißgasfläche
- 32: Heißgasfläche
- 34: dünnwandiger Bereich
- 36: dickwandiger Bereich
- 38, 38': Dehnungsfuge
- 40a, b: Überlappung
- 42: Kühlluftkanal
- 44: Kühlluftbohrung
- 46, 46': Segment
- 48: Grundkörperabschnitt

## Patentansprüche

1. Bauteil für eine Strömungsmaschine mit einem generativ hergestellten Grundkörper (2) aus einem ersten Material und mit zumindest einem an dem Grundkörper (2) aufgebauten Bauteilabschnitt (4, 4a, 4b) aus einem andersartigen zweiten Material, wobei der Grundkörper (2) und der zumindest eine Bauteilabschnitt (4, 4a, 4b) formschlüssig derart miteinander verzahnt sind, dass die formschlüssige Verzahnung quasi einen Anker des Bauteilabschnitts in dem Grundkörper bildet, wobei die Verzahnung (12) zwischen dem Grundkörper (2) und dem zumindest einen Bauteilabschnitt (4, 4a, 4b) verschiedene Verzahnungsgeometrieen (14a, 14b) aufweist und wobei der zumindest eine Bauteilabschnitt (4, 4a, 4b) am Grundkörper (2) entweder generativ aufgebaut ist oder durch Aufbringen des zweiten Materials in trockener Pulverform oder als Dispersion auf den Grundkörper und anschließendem Sintern unterhalb der Schmelztemperatur des Grundkörpermaterials aufgebaut ist, **dadurch gekennzeichnet, dass** der zumindest eine Bauteilabschnitt (4, 4a, 4b) derart segmentiert ist, dass dieser in einzelne Segmente unterteilt ist, die über schmale Grundkörperbereiche voneinander beabstandet sind.

2. Bauteil nach Anspruch 1, wobei der zumindest eine Bauteilabschnitt (4, 4a, 4b) zumindest eine Dehnungsfuge (38, 38') aufweist.

3. Bauteil nach Anspruch 1 oder 2, wobei in den zumindest einen Bauteilabschnitt (4, 4a, 4b) Verstärkungsfasern eingebracht sind.

4. Bauteil nach einem der vorhergehenden Ansprüche, wobei der zumindest eine Baueilabschnitt (4, 4a, 4b) und der Grundkörper (2) an äußeren Stoßstellen Überlappungen (40a, 40b) bilden.

5. Bauteil nach einem der vorhergehenden Ansprüche, wobei zumindest der zumindest eine Bauteilabschnitt (4, 4a, 4b) mit einer gesinterten Deckschicht versehen ist.

## Claims

1. Component for a turbomachine, comprising an additively manufactured main part (2) made of a first material, and at least one component portion (4, 4a, 4b) constructed on the main part (2), which portion is made of a different second material, the main part (2) and the at least one component portion (4, 4a, 4b) being interlocked in a toothed manner such that the interlocking toothing more or less forms an anchor of the component portion in the main part, the interlocking toothing (12) between the main part (2) and the at least one component portion (4, 4a, 4b) having different toothing geometries (14a, 14b), and the at least one component portion (4, 4a, 4b) on the main part (2) either being constructed additively or by means of applying the second material in dry powder form or as a dispersion to the main part, and then sintering below the melting temperature of the material of the main part, **characterized in that** the at least one component portion (4, 4a, 4b) is segmented in such a way that it is divided into individual segments which are spaced apart from one another by narrow regions of the main part.

2. Component according to claim 1, wherein the at least one component portion (4, 4a, 4b) has at least one expansion joint (38, 38').

3. Component according to either claim 1 or claim 2, wherein reinforcing fibers are introduced into the at least one component portion (4, 4a, 4b).

4. Component according to any of the preceding claims, wherein the at least one component portion (4, 4a, 4b) and the main part (2) form overlapping regions (40a, 40b) at outer joints.

5. Component according to any of the preceding claims, wherein at least the at least one component portion (4, 4a, 4b) is provided with a sintered cover layer.

## Revendications

1. Composant pour une turbomachine comprenant un corps principal construit de manière générative (2) à partir d'un premier matériau et au moins une section de composant (4, 4a, 4b) construite sur le corps principal (2) à partir d'un autre type de second matériau, dans lequel le corps principal (2) et l'au moins une section de composant (4, 4a, 4b) sont engrenés par liaison de forme de telle manière que la denture par liaison de forme forme presque un ancrage de la section de composant dans le corps principal, dans lequel la denture (12) entre le corps principal (2) et l'au moins une section de composant (4, 4a, 4b) a des géométries de denture différentes (14a, 14b), et dans lequel l'au moins une section de composant (4, 4a, 4b) sur le corps principal (2) est soit construite de manière générative soit construite en appliquant le second matériau sous forme de poudre sèche ou en dispersion sur le corps principal et le frittage subséquent se trouve en dessous de la température de fusion du matériau du corps principal, **caractérisé en ce que** l'au moins une section de composant (4, 4a, 4b) est segmentée de telle manière qu'elle est divisée en segments individuels qui sont espacés les uns des autres par l'intermédiaire de régions de corps principal étroites.

2. Composant selon la revendication 1, dans lequel l'au moins une section de composant (4, 4a, 4b) comporte au moins un joint de dilatation (38, 38').

3. Composant selon la revendication 1 ou 2, dans lequel des fibres de renforcement sont introduites dans l'au moins une section de composant (4, 4a, 4b).

4. Composant selon l'une des revendications précédentes, dans lequel l'au moins une section de composant (4, 4a, 4b) et le corps principal (2) forment des chevauchements (40a, 40b) au niveau des points d'aboutement externes.

5. Composant selon l'une des revendications précédentes, dans lequel au moins l'au moins une section de composant (4, 4a, 4b) est pourvue d'une couche de couverture frittée.
